# EUROPEAN PATENT APPLICATION

(11) **EP 4 174 995 A1**
(43) Date of publication of application: **03.05.2023**
(21) Application number: 21872838.4
(22) Date of filing: 16.09.2021
(51) Int. Cl.: H01M 10/04, H01M 50/572, H01M 50/531

(54) **SECONDARY BATTERY MANUFACTURING METHOD AND SECONDARY BATTERY**

(30) Priority: 23.09.2020 KR 20200123363; 02.06.2021 KR 20210071815
(71) Applicant: LG Energy Solution, Ltd., Seoul 07335 (KR)
(72) Inventor: NOH, Tae Gyun, Daejeon 34122 (KR); PARK, Sung Bin, Daejeon 34122 (KR); JO, Mi Ru, Daejeon 34122 (KR); HAN, Jeong In, Daejeon 34122 (KR)
(74) Representative: Plasseraud IP
(86) International application number: PCT/KR2021/012733
(87) International publication number: WO 2022/065810

(57) **Abstract**

The present invention relates to a method for manufacturing a secondary battery. The method for manufacturing the secondary battery comprises: a folded cell formation process of seating unit cells, each of which comprises at least one electrode and at least one separator, on one surface of a separation film to sequentially fold the unit cells, thereby forming a folded cell; a tape attachment process of attaching a pressing tape to an end of the folded cell; an accommodation process of accommodating the folded cell, to which the pressing tape is attached, and an electrolyte in a battery case; and a pressing process of pressing an outer surface of the battery case to press the folded cell.

## Description

### CROSS-REFERENCE TO RELATED APPLICATION

The present application claims the benefit of the priority of Korean Patent Application Nos. 10-2020-0123363, filed on September 23, 2020, and 10-2021-0071815, filed on June 02, 2021, which are hereby incorporated by reference in their entirety.

### TECHNICAL FIELD

The present invention relates to a method for manufacturing a secondary battery and a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

Also, the electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Recently, the pouch-type battery in which a stack/folding type electrode assembly is built in a pouch-type battery case provided as an aluminum lamination sheet is attracting much attention due to its low manufacturing cost, light weight, easy shape deformation, and the like, and thus, its usage is gradually increasing.

As the demands for rapid charging of lithium pouch-type batteries are advanced, cells are being designed in tendency of high energy, long lifespan, and low swelling.

As a rate of the rapid charging increases, lithium precipitation occurs in the cells. Although the lithium precipitation initially occur locally, the lithium precipitation eventually causes a problem of deterioration in retention and swelling of the cells.

In the recent issue of the rapid charging, there is a problem that the precipitation occurring at an upper end of the cell, and in order to satisfy the fast charging and long lifespan, the problem of the precipitation at the upper end has to be solved. That is, lamination of the upper end of the cell is weak, and thus, an electrolyte is stagnated, which causes lithium precipitation, and as a result, many problems occur.

[Prior Art Document] (Patent Document) Korean Patent Publication No. 10-2018-0051072

### DISCLOSURE OF THE INVENTION

### TECHNICAL PROBLEM

One aspect of the present invention is to provide a method for manufacturing a secondary battery, which is capable of preventing precipitation from occurring at an end of a folded cell, and a secondary battery.

### TECHNICAL SOLUTION

A method for manufacturing a secondary battery according to an embodiment of the present invention comprises: a folded cell formation process of seating unit cells, each of which comprises at least one electrode and at least one separator, on one surface of a separation film to sequentially fold the unit cells, thereby forming a folded cell; a tape attachment process of attaching a pressing tape to an end of the folded cell; an accommodation process of accommodating the folded cell, to which the pressing tape is attached, and an electrolyte in a battery case; and a pressing process of pressing an outer surface of the battery case to press the folded cell.

A secondary battery according to an embodiment of the present invention comprises: a folded cell comprising: a plurality of unit cells comprising at least one electrode and at least one separator; and a separation film folded to be disposed between the plurality of unit cells; a pressing tape attached to the folded cell; and a battery case, in which the folded cell and an electrolyte are accommodated, wherein the pressing tape is attached to an end of the folded cell so that the end of the folded cell is pressed when pressing an outer surface of the battery case.

### ADVANTAGEOUS EFFECTS

According to the present invention, the pressing tape may be attached to the end of the folded cell to apply the pressing force to the end of the folded cell so that the electrolyte, which is stagnated at the end of the end, is pushed out of the unit cell, thereby preventing the precipitation from occurring and also preventing the abnormal swelling and the retention fading in the long-term cycle from occurring.

### BRIEF DESCRIPTION OF THE DRAWINGS

FIG. 1 is a plan view illustrating a folded cell formation process in a method for manufacturing a secondary battery according to an embodiment of the present invention.
FIG. 2 is a plan view of a unit cell in the method for manufacturing the secondary battery according to an embodiment of the present invention.
FIG. 3 is a perspective view illustrating a first example of a tape attachment process in the method for manufacturing the secondary battery according to an embodiment of the present invention.
FIG. 4 is a perspective view illustrating an accommodation process in the method for manufacturing the secondary battery according to an embodiment of the present invention.
FIG. 5 is a plan view illustrating a pressing process in the method for manufacturing the secondary battery according to an embodiment of the present invention.
FIG. 6 is a perspective view illustrating a second example of the tape attachment process in the method for manufacturing the secondary battery according to an embodiment of the present invention.
FIG. 7 is a perspective view illustrating a third example of the tape attachment process in the method for manufacturing the secondary battery according to an embodiment of the present invention.
FIG. 8 is a perspective view illustrating a fourth example of the tape attachment process in the method for manufacturing the secondary battery according to an embodiment of the present invention.
FIG. 9 is a graph illustrating performance of the secondary battery manufactured in the method for manufacturing the secondary battery according to an embodiment of the present invention and the secondary battery according to the related art.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Method for manufacturing secondary battery according to embodiment

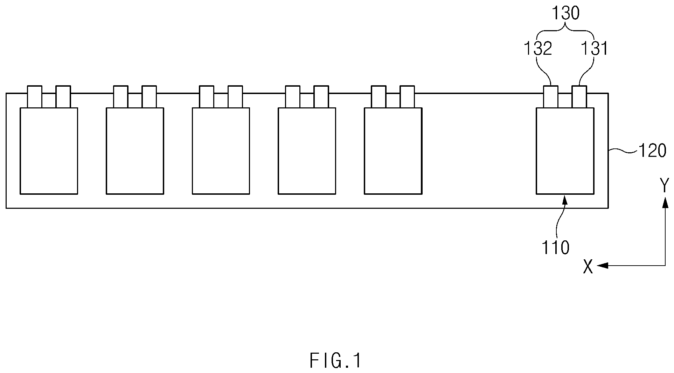

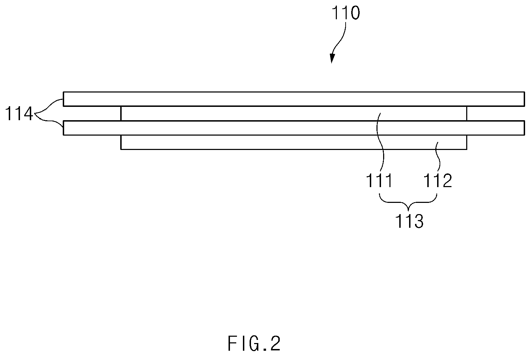

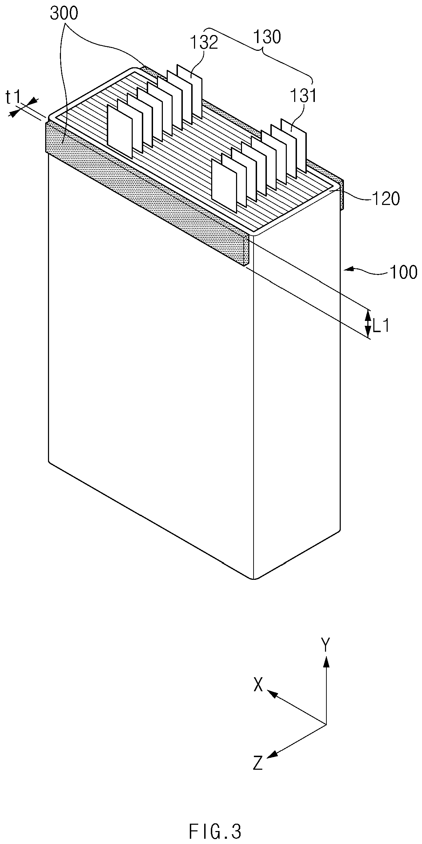

FIG. 1 is a plan view illustrating a folded cell formation process in a method for manufacturing a secondary battery according to an embodiment of the present invention, FIG. 2 is a plan view of a unit cell in the method for manufacturing the secondary battery according to an embodiment of the present invention, and FIG. 3 is a perspective view illustrating a first example of a tape attachment process in the method for manufacturing the secondary battery according to an embodiment of the present invention.

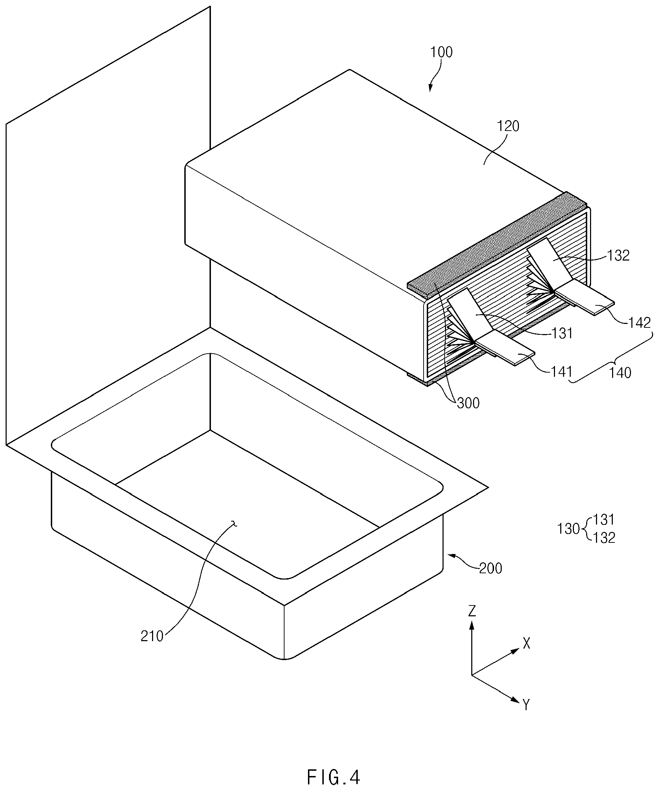

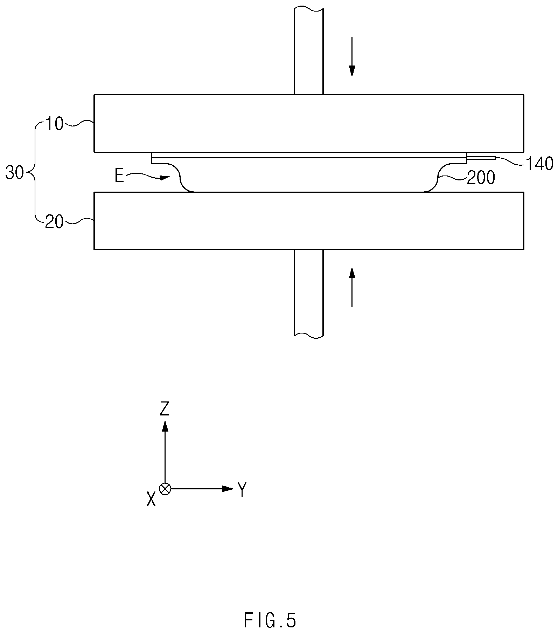

Also, FIG. 4 is a perspective view illustrating an accommodation process in the method for manufacturing the secondary battery according to an embodiment of the present invention, and FIG. 5 is a plan view illustrating a pressing process in the method for manufacturing the secondary battery according to an embodiment of the present invention.

Referring to FIGS. 1 to 5, a method for manufacturing a secondary battery according to an embodiment of the present invention may comprise a folded cell formation process of seating unit cells 110 on one surface of a separation film 120 to form a folded cell, a tape attachment process of attaching a pressing tape 300 to the folded cell 100, an accommodation process of accommodating the folded cell 100 and an electrolyte in a battery case 200, and a pressing process of pressing the battery case 200.

Hereinafter, the method for manufacturing the secondary battery according to an embodiment of the present invention will be described in more detail.

Referring to FIGS. 1 and 2, in the folded cell formation process, the plurality of unit cells 110, each of which comprises at least one electrode 113 and at least one separator 114, may be seated on one surface of the separation film 120 and then sequentially folded to form the folded cell 100. Here, the separation film 120 may be folded to be disposed between the plurality of unit cells 110. Here, referring to FIG. 1, the separation film 120 may be folded in an X-axis direction to form the folded cell 100.

The unit cell 110 is a chargeable and dischargeable power generation element and has a structure in which at least one electrode 113 and at least one separator 114 are combined to be alternately stacked.

The electrodes 113 may comprise a positive electrode 111 and a negative electrode 112. Also, the separator 114 separates and electrically insulates the positive electrode 111 and the negative electrode 112 from each other.

The separator 114 is made of an insulation material, and the positive electrode 111, the separator 114, and the negative electrode 112 are alternately laminated.

The separator 114 may be, for example, a multi-layer film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The unit cell 110 may further comprise an electrode tab 130 provided at an end of the electrode 113. Here, the electrode tab 130 may be provided on the electrode 113. Here, an upper portion of the electrode 113 may be an upper portion of the folded cell 100 in a direction parallel to a direction of a folding axis of the folded cell 100. Here, referring to FIG. 1, the direction of the folding axis of the folded cell 100 may be a Y-axis direction. In the method for manufacturing the secondary battery according to the present invention, the electrode tab 130 is not necessarily limited to being provided on the upper portion of the electrode 113. For example, the electrode tab 130 may also be provided on each of both portions, i.e., upper and lower portions of the electrode 113. The electrode tab 130 may comprise a positive electrode tab 131 provided on an end of the positive electrode 111 and a negative electrode tab provided on an end of the negative electrode 112. Here, for example, the positive electrode tab 131 may be provided on the upper portion of the positive electrode 111, and the negative electrode tab 132 may be provided on the upper portion of the negative electrode 112.

The folded cell 100 may further comprise an electrode lead 140 having one side connected to the electrode tab 130 and the other side protruding to the outside of the battery case 200 to be connected to an external terminal.

The electrode lead 140 may comprise a positive electrode lead 141 connected to the positive electrode tab 131 and a negative electrode lead connected to the negative electrode tab 132.

Referring to FIG. 3, in the tape attachment process, the pressing tape 300 may be attached to an end of the folded cell 100.

In addition, in the tape attachment process, as a first example, the pressing tape 300 may be attached to an end at which the electrode tab 130 is disposed in the folded cell 100. Here, as the first specific example of the tape attachment process, the pressing tape 300 may be attached to the upper portion at which the electrode tab 130 is disposed in the folded cell 100. Here, in the tape attachment process, the pressing tape 300 may be further attached to a lower portion of the folded cell 100.

In addition, in the tape attachment process, the pressing tape 300 may be attached to the outermost surface of the separation film 120.

Here, in the tape attachment process, as the first example, when the cell 100 to be folded is folded, the pressing tape 300 may be attached to at least one surface of a front surface or a rear surface of the folded cell 100 in the direction perpendicular to the folding axis. In this case, referring to FIG. 3, the direction of the folding axis may be the Y-axis direction, and the direction perpendicular to the folding axis may be a Z-axis direction.

Here, the pressing tape 300 may have a thickness t1 in a range of 10 µm to 300 um. Accordingly, the thickness t1 of the pressing tape 300 is formed to be 10 µm or more, and thus, stronger pressing force is applied to the end in the folded cell 100 through the pressing tape 300 when the outer surface of the battery case 200 is pressed. In addition, since the pressing tape 300 has the thickness that is less than 300 µm or less, it may not occupy an excessive space, and the separator disposed on the outer surface of the folded cell 100 may not be damaged by the excessive pressing force.

In addition, a length L1 of the pressing tape attached to the folded cell 100 in the folding axis direction of the folded cell 100 may be formed in a range of 5 mm to 300 mm. Thus, when the length L1 of the pressing tape 300 is formed to be 5 mm or more, and the outer surface of the battery case 200 is pressed, the pressing force may be effectively applied to the end in the folded cell 100, which may be stagnated in the electrolyte, through the pressing tape 300, and also, since the pressing tape 300 is formed to be 300 mm or less, the excessive space may not be occupied, and it is possible to prevent the effect, in which the electrolyte is pushed out of the folded cell 100 to be too far from the portion of the folded cell 100, which may be stagnated in the electrolyte, from being reduced.

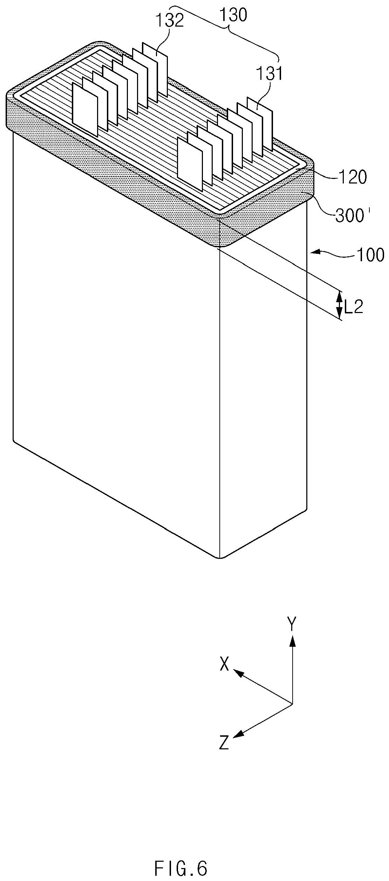

FIG. 6 is a perspective view illustrating a second example of the tape attachment process in the method for manufacturing the secondary battery according to an embodiment of the present invention.

Referring to FIG. 6, in the tape attachment process, as a second example, a pressing tape 300' may be attached to surround an upper portion of a folded cell 100 so that an end of the folded cell 100 is pressed. Here, in the tape attachment process, as the specific second example, the pressing tape 300' may be attached to surround an upper portion of the folded cell 100 so that the upper portion of the folded cell 100 is pressed. Here, the pressing tape 300' may be attached to surround the folded cell 100 in a folding direction of the folded cell 100. That is, the pressing tape 300' may be attached to surround the upper portion of the folded cell 100 in a full-width direction of the folded cell 100. Thus, it is possible to easily press the upper portion of the folded cell 100 and maintain the pressing force.

Here, tension of the pressing tape 300' may be maintained so that the upper portion of the folded cell 100 is pressed against the pressing tape 300'. Here, the pressing tape 300' may have a thickness in a range of 1 µm to 300 µm. Thus, the thickness of the pressing tape 300' is formed to be 1 um or more, and thus, pressing force is applied to the end of the folded cell 100 through the pressing tape 300' that presses the upper portion of the folded cell 100 while surrounding the upper portion of the folded cell 100 so that the upper portion of the folded cell 100 is pressed. In addition, since the pressing tape 300' has the thickness that is less than 300 µm or less, it may not occupy an excessive space, and a separator disposed on an outer surface of the folded cell 100 may not be damaged by the excessive pressing force.

In addition, a length L2 of the pressing tape attached to the folded cell 100 in a folding axis direction of the folded cell 100 may be formed in a range of 0.5 mm to 300 mm. Thus, the length L2 of the pressing tape 300' is formed to be 0.5mm or more, and thus, the pressing force may be effectively applied to the end of the folded cell 100, which may be stagnated in the electrolyte, through the pressing tape 300' that presses the upper portion of the folded cell 100 while surrounding the upper portion of the folded cell 100 so that the upper portion of the folded cell 100 is pressed. In addition, since the pressing tape 300' has the thickness that is less than 300 µm or less, it may not occupy an excessive space, and a separator disposed on an outer surface of the folded cell 100 may not be damaged by the excessive pressing force.

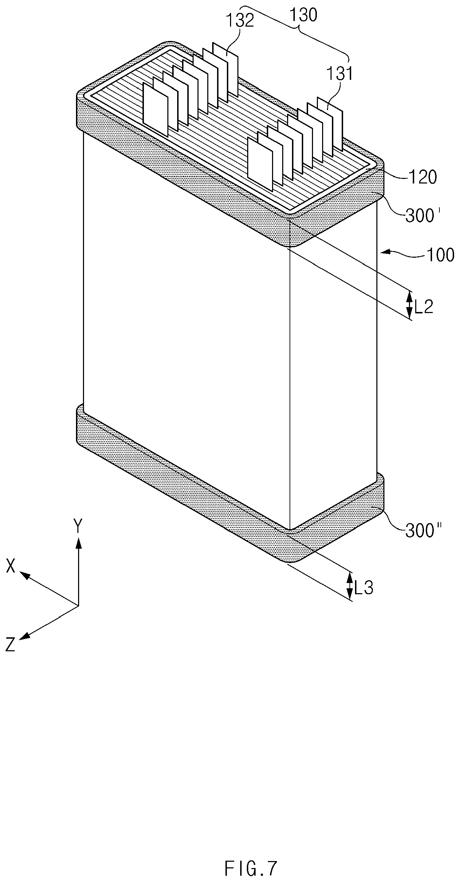

FIG. 7 is a perspective view illustrating a third example of the tape attachment process in the method for manufacturing the secondary battery according to an embodiment of the present invention.

Referring to FIG. 7, in the tape attachment process, as the third specific example, pressing tapes 300' and 300" may be attached to surround upper and lower portions of the folded cell 100 so that the upper and lower portions of the folded cell 100 is pressed. Here, the pressing tapes 300' and 300" may be attached to surround the folded cell 100 in a folding direction of the folded cell 100. That is, one pressing tape 300' may be attached to surround the upper portion of the folded cell 100 in a full-width direction of the folded cell 100, and the other pressing tape 300" may be attached to surround the lower portion of the folded cell 100 in the full-width direction of the folded cell 100. Thus, it is possible to easily press the upper and lower portions of the folded cell 100 and maintain the pressing force. Here, each of the pressing tapes 300' and 300" has a thickness of 1 µm to 300 µm, and lengths L2 and L3 of the pressing tapes 300' and 300" attached to the folded cell 100 in the direction of the folding axis of the folded cell 100 may be formed to 0.5 mm to 300 mm.

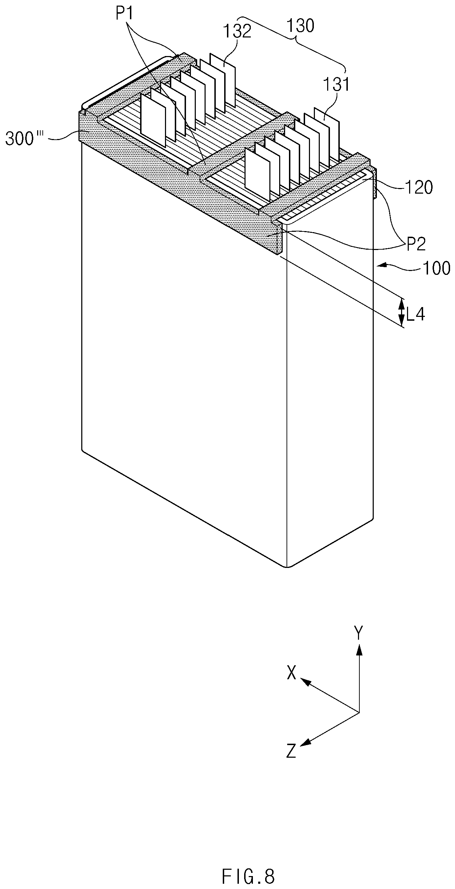

FIG. 8 is a perspective view illustrating a fourth example of the tape attachment process in the method for manufacturing the secondary battery according to an embodiment of the present invention.

Also, referring to FIG. 8, in the tape attachment process, as a fourth example, a pressing tape 300"' may be attached to surround an upper portion of a folded cell 100 so that an end of the folded cell 100 is pressed. Here, in the tape attachment process, as a fourth specific example, the pressing tape 300"' may be attached to surround an upper portion of a folded cell 100 so that the upper portion of the folded cell 100 is pressed. Here, when the cell 100 to be folded is folded, the pressing tape 300"' may be attached to surround front and rear surfaces of the folded cell 100 in a direction perpendicular to a folding axis and the upper portion of the folded cell 100 in a direction of the folding axis of the folded cell 100. That is, as the fourth example, the pressing tape 300"' may comprise a first portion P1 attached to the front and rear surfaces of the folded cell 100 in the direction perpendicular to the folding axis of the folded cell 100 and a second portion P2 attached to surround the upper portion of the folded cell 100 in the direction of the folding axis of the folded cell 100. Therefore, the pressing tape 300"' may be attached to surround the upper portion of the folded cell 100 in the full-length direction of the folded cell 100, thereby preventing a full-width of the folded cell 100 from increasing, preventing the folded cell 100 from being unwound, and suppressing excessive swelling. In addition, since an end of an electrode 113 is thinner than a central portion, it is possible to prevent the electrode 113 from being separated from the separator 114. Here, the pressing tape 300‴ may have a thickness in a range of 10 um to 300 um. In addition, a length L4 of the pressing tape 300"' attached to the folded cell 100 in the direction of the folding axis of the folded cell 100 may be formed in a range of 5 mm to 300 mm. That is, the first portion P1 of the pressing tape 300‴ attached to the folded cell 100 may have a length of 5 mm to 300 mm.

Referring to FIG. 4, in the accommodation process, the folded cell 100, to which the pressing tape 300 is attached, and the electrolyte may be accommodated in the battery case 200. Here, the accommodating part 210 is formed inside the battery case 200 to accommodate the folded cell 100 and the electrolyte.

In addition, in the accommodation process, after the folded cell 100 and the electrolyte are accommodated in the battery case 200, an outer circumferential surface of the battery case 200 may be sealed through thermal fusion. Here, upper and lower portions of the battery case 200 may be bonded to each other by applying heat and a pressure along an outer edge of the accommodation part 210 of the battery case 200.

Referring to FIG. 5, in the pressing process, the folded cell 100 may be pressed while pressing the outer surface of the battery case 200.

In the pressing process, both surfaces of the battery case 200 may be pressed at both sides of the battery case 200 through a pair of pressing jigs 30.

The pair of pressing jigs 30 may comprise an upper jig 10 and a lower jig 20. Here, in the pressing process, upper and lower sides of the battery case 200 in which the folded cell 100 is accommodated between the upper jig 10 and the lower jig 20 may be pressed.

Thus, when an secondary battery E is pressed through the pressing jigs 30, the pressing tape 300 attached to the upper portion of the folded cell 100 may more strongly press the upper portion of the folded cell100 to easily push the electrolyte stagnated in the upper portion of the folded cell 100 to the outside of the folded cell 100. Thus, it is possible to prevent precipitation from occurring and prevent abnormal swelling and retention fading in a long cycle.

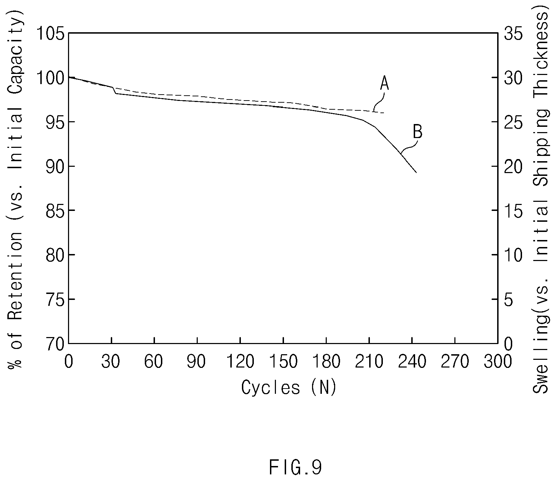

FIG. 9 is a graph illustrating performance of the secondary battery manufactured in the method for manufacturing the secondary battery according to an embodiment of the present invention and the secondary battery according to the related art.

The graph shown in FIG. 9 shows cycle performance of a secondary battery A according to the present invention, in which the pressing tape is attached to the folded cell and a secondary battery B according to the related art, in which the pressing tape is not attached to the folded cell.

Referring to the graph shown in FIG. 9, it is seen that, in the secondary battery A manufactured by the method for manufacturing the secondary battery according to an embodiment of the present invention, retention is not changed almost as a charging/discharging cycle progresses, whereas, in the secondary battery B according to the related art, rapid retention fading occurs after 210 cycles as the charging/discharging cycle progresses.

Therefore, it may be seen that, when the secondary battery A manufactured by the method for manufacturing the secondary battery according to an embodiment of the present invention is pressed through the pressing tape attached to the upper portion of the folded cell, the electrolyte may be pushed out to be prevented from being precipitated from the upper portion of the folded cell.

### Secondary battery according to embodiment

Hereinafter, a secondary battery according to an embodiment of the present invention will be described.

Referring to FIGS. 1 to 5, a secondary battery E according to an embodiment of the present invention comprises a folded cell 100 comprising a plurality of unit cells 110 and a separation film 120 that is folded to be disposed between the plurality of unit cells 110, a pressing tape 300 attached to the folded cell 100, and a battery case 200, in which an electrolyte is accommodated.

The secondary battery E according to an embodiment of the present invention relates to the secondary battery manufactured by the method for manufacturing the secondary battery according to the foregoing embodiment. Thus, contents of this embodiment, which are duplicated with those according to the forgoing embodiment, will be omitted or briefly described, and also, differences therebetween will be mainly described.

In more detail, referring to FIGS. 1 and 2, the folded cell 100 may comprise unit cells 110 and a separation film 120.

Each of the unit cells 110 may comprise at least one electrode 113 and at least one separator 114. The unit cell 110 may be a chargeable and dischargeable power generation element and have a structure in which at least one electrode 113 and at least one separator 114 are combined to be alternately stacked.

The electrodes 113 may comprise a positive electrode 111 and a negative electrode 112. Also, the separator 114 separates and electrically insulates the positive electrode 111 and the negative electrode 112 from each other.

The separation film 120 may be folded to be disposed between the plurality of unit cells 110.

The unit cell 110 may further comprise an electrode tab 130 provided at an end of the electrode 113. Here, the electrode tab 130 may be provided on the electrode 113. Here, an upper portion of the electrode 113 may be an upper portion of the folded cell 100 in a direction parallel to a direction of a folding axis of the folded cell 100. Here, referring to FIG. 1, the direction of the folding axis of the folded cell 100 may be a Y-axis direction. In the secondary battery according to the present invention, the electrode tab 130 is not necessarily limited to being provided on an upper portion of the electrode 113. For example, the electrode tab 130 may be provided at each of both sides, i.e., upper and lower portions of the electrode 113.

The electrode tab 130 may comprise a positive electrode tab 131 provided at an end of the positive electrode and a negative electrode tab 132 provided at an end of the negative electrode 112. Here, for example, the positive electrode tab 131 may be provided on the upper portion of the positive electrode 111, and the negative electrode tab 132 may be provided on the upper portion of the negative electrode 112.

The folded cell 100 may further comprise an electrode lead 140 having one side connected to the electrode tab 130 and the other side protruding to the outside of the battery case 200 to be connected to an external terminal.

The electrode lead 140 may comprise a positive electrode lead 141 connected to the positive electrode tab 131 and a negative electrode lead connected to the negative electrode tab 132.

The battery case 200 may comprise an accommodation part 210, in which the folded cell 100 and the electrolyte are accommodated. Here, the battery case 200 may be provided as a pouch-type battery case made of a flexible material. Here, the battery case 200 may comprise, for example, an aluminum sheet and a resin layer provided on each of both surfaces of the aluminum sheet.

Referring to FIG. 3, the pressing tape 300 may be attached to the folded cell 100. Here, the pressing tape 300 may be attached to an end of the folded cell 100 so that the end of the folded cell 100 is pressed when an outer surface of the battery case is pressed.

In addition, the pressing tape 300 comprises a heat dissipation material, and thus, when the electrode tab 130 disposed at the end of the folded cell 100 generates heat, the heat generated from the end of the folded cell 100 may be dissipated to prevent the folded cell 100 comprising the separator from being damaged.

In addition, the pressing tape 300 may comprise a base material and an adhesive layer provided on one surface of the base material. Here, the base material may be provided as a polymer resin film. In this case, the base material may comprise, for example, any one of polypropylene, polyethylene, polyimide, and polyethylene terephthalate. Particularly, polyimide and polyethylene terephthalate are materials having an excellent heat dissipation function.

In addition, the pressing tape 300 may be attached to the outermost surface of the separation film 120.

Furthermore, the pressing tape 300 may be attached to an end at which the electrode tab 130 is disposed in the folded cell 100. Here, the pressing tape 300 may be attached to an upper portion at which the electrode tab 130 is disposed in the folded cell 100 as a first example. Here, the pressing tape 300 may be further attached to a lower portion of the folded cell 100.

More specifically, referring to FIG. 3, the pressing tape 300 may be attached to at least one or more surfaces of a front or rear surface of the folded cell 100 in a direction perpendicular to a folding axis of the folded cell 100 as the first example. Here, the pressing tape 300 may be attached to the front and rear surfaces of the folded cell 100 in the direction perpendicular to the folding axis of the folded cell 100 as the first specific example. In this case, referring to FIG. 3, the direction of the folding axis may be a Y-axis direction, and the direction perpendicular to the folding axis may be a Z-axis direction. Here, the pressing tape 300 may have a thickness t1 in a range of 10 µm to 300 um. Accordingly, the thickness t1 of the pressing tape 300 is formed to be 10 um or more, and thus, stronger pressing force is applied to the end in the folded cell 100 through the pressing tape 300 when the outer surface of the battery case 200 is pressed. In addition, since the pressing tape 300 has the thickness that is less than 300 µm or less, it may not occupy an excessive space, and the separator disposed on the outer surface of the folded cell 100 may not be damaged by the excessive pressing force.

In addition, a length L1 of the pressing tape attached to the folded cell 100 in the folding axis direction of the folded cell 100 may be formed in a range of 5 mm to 300 mm. Thus, when the length L1 of the pressing tape 300 is formed to be 5 mm or more, and the outer surface of the battery case 200 is pressed, the pressing force may be effectively applied to the end in the folded cell 100, which may be stagnated in the electrolyte, through the pressing tape 300, and also, since the pressing tape 300 is formed to be 300 mm or less, the excessive space may not be occupied, and it is possible to prevent the effect, in which the electrolyte is pushed out of the folded cell 100 to be too far from the portion of the folded cell 100, which may be stagnated in the electrolyte, from being reduced.

Referring to FIG. 6, the pressing tape 300' may be attached to surround the end of the folded cell 100 so that the upper portion of the folded cell 100 is pressed as a second example. Here, as the specific second example, the pressing tape 300' may be attached to surround an upper portion of the folded cell 100 so that the upper portion of the folded cell 100 is pressed. Here, the pressing tape 300' may be attached to surround the folded cell 100 in a folding direction of the folded cell 100. Here, tension of the pressing tape 300' may be maintained so that the upper portion of the folded cell 100 is pressed against the pressing tape 300'. Here, the pressing tape 300' may have a thickness in a range of 1 µm to 300 µm. Thus, the thickness of the pressing tape 300' is formed to be 1 um or more, and thus, pressing force is applied to the end of the folded cell 100 through the pressing tape 300' that presses the upper portion of the folded cell 100 while surrounding the upper portion of the folded cell 100 so that the upper portion of the folded cell 100 is pressed. In addition, since the pressing tape 300' has the thickness that is less than 300 µm or less, it may not occupy an excessive space, and a separator disposed on an outer surface of the folded cell 100 may not be damaged by the excessive pressing force.

In addition, a length L2 of the pressing tape attached to the folded cell 100 in a folding axis direction of the folded cell 100 may be formed in a range of 0.5 mm to 300 mm. Thus, the length L2 of the pressing tape 300' is formed to be 0.5mm or more, and thus, the pressing force may be effectively applied to the end of the folded cell 100, which may be stagnated in the electrolyte, through the pressing tape 300' that presses the upper portion of the folded cell 100 while surrounding the upper portion of the folded cell 100 so that the upper portion of the folded cell 100 is pressed. In addition, since the pressing tape 300' has the thickness that is less than 300 µm or less, it may not occupy an excessive space, and a separator disposed on an outer surface of the folded cell 100 may not be damaged by the excessive pressing force.

Also, referring to FIG. 7, as a third example, the pressing tapes 300' and 300" may be attached to surround the upper portion of the folded cell 100 so that the upper portion of the folded cell 100 is pressed and also may be attached to surround the lower portion of the folded cell 100 so that the lower portion of the folded cell 100 is pressed. Here, the pressing tapes 300' and 300" may be attached to surround the front and rear surfaces of the folded cell 100 in a direction perpendicular to the folding axis of the folded cell 100 and the upper and lower portions of the folded cell 100 in the direction of the folding axis of the folded cell 100. Here, each of the pressing tapes 300' and 300" has a thickness of 1 µm to 300 µm, and lengths L2 and L3 of the pressing tapes 300' and 300" attached to the folded cell 100 in the direction of the folding axis of the folded cell 100 may be formed to 0.5 mm to 300 mm.

Also, referring to FIG. 8, the pressing tape 300"' may be attached to surround the upper portion of the folded cell 100 so that the end of the folded cell 100 is pressed as a fourth example. Here, as the fourth specific example, the pressing tape 300"' may be attached to surround an upper portion of a folded cell 100 so that the upper portion of the folded cell 100 is pressed. Here, the pressing tape 300"' may be attached to surround front and rear surfaces of the folded cell 100 in a direction perpendicular to a folding axis and the upper portion of the folded cell 100 in a direction of the folding axis of the folded cell 100. That is, as the fourth example, the pressing tape 300"' may comprise a first portion P1 attached to the front and rear surfaces of the folded cell 100 in the direction perpendicular to the folding axis of the folded cell 100 and a second portion P2 attached to surround the upper portion of the folded cell 100 in the direction of the folding axis of the folded cell 100. Here, the pressing tape 300"' may have a thickness in a range of 10 µm to 300 um. In addition, a length L4 of the pressing tape 300"' attached to the folded cell 100 in the direction of the folding axis of the folded cell 100 may be formed in a range of 5 mm to 300 mm. That is, the first portion P1 of the pressing tape 300"' attached to the folded cell 100 may have a length of 5 mm to 300 mm.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

10: Upper jig
20: lower jig
30: Pressing jig
100: folded cell
110: Unit cell
111: Positive electrode
112: Negative electrode
113: Electrode
114: Separator
120: Separation film
130: Electrode tab
131: Positive electrode tab
132: Negative electrode tab
140: Electrode lead
141: Positive electrode lead
142: Negative electrode lead
200: Battery case
210: Accommodation part
300, 300', 300", 300"': Pressing tape
E: Secondary battery

## Claims

1. A method for manufacturing a secondary battery, the method comprising:
a folded cell formation process of seating unit cells, each of which comprises at least one electrode and at least one separator, on one surface of a separation film to sequentially fold the unit cells, thereby forming a folded cell;
a tape attachment process of attaching a pressing tape to an end of the folded cell;
an accommodation process of accommodating the folded cell, to which the pressing tape is attached, and an electrolyte in a battery case; and
a pressing process of pressing an outer surface of the battery case to press the folded cell.

2. The method of claim 1, wherein the unit cell further comprises an electrode tab provided on an upper portion of the electrode, and
in the tape attachment process, the pressing tape is attached to the upper portion, at which the electrode tab is disposed in the folded cell.

3. The method of claim 2, wherein, in the tape attachment process, the pressing tape is further attached to a lower portion of the folded cell.

4. The method of claim 2, wherein, in the tape attachment process, the pressing tape is attached to the outermost surface of the separation film.

5. The method of claim 4, wherein, in the tape attachment process, when the cell to be folded is folded, the pressing tape is attached to one or more surfaces of a front or rear surface of the folded cell in a direction perpendicular to a folding axis.

6. The method of claim 4, wherein, in the tape attachment process, the pressing tape is attached to surround an upper portion of the folded cell so that the upper portion of the folded cell is pressed.

7. The method of claim 6, wherein, in the tape attachment process, the pressing tape is attached to surround the folded cell in a folding direction of the folded cell.

8. The method of claim 6, wherein, in the tape attachment process, the pressing tape is attached to surround the upper portion of the folded cell in a direction of a folding axis of the folded cell.

9. A secondary battery comprising:
a folded cell comprising: a plurality of unit cells comprising at least one electrode and at least one separator; and a separation film folded to be disposed between the plurality of unit cells;
a pressing tape attached to the folded cell; and
a battery case, in which the folded cell and an electrolyte are accommodated,
wherein the pressing tape is attached to an end of the folded cell so that the end of the folded cell is pressed when pressing an outer surface of the battery case.

10. The secondary battery of claim 9, wherein the unit cell further comprises an electrode tab provided on an upper portion of the electrode, and
the pressing tape is attached to the upper portion, at which the electrode tab is disposed in the folded cell.

11. The secondary battery of claim 10, wherein the pressing tape is further attached to a lower portion of the folded cell.

12. The secondary battery of claim 10, wherein the pressing tape is attached to the outermost surface of the separation film.

13. The secondary battery of claim 12, wherein the pressing tape is attached to one or more surfaces of a front or rear surface of the folded cell in a direction perpendicular to a folding axis of the folded cell.

14. The secondary battery of claim 13, wherein the pressing tape has a thickness of 10 µm to 300 µm.

15. The secondary battery of claim 13, wherein a length of the pressing tape attached to the folded cell in a direction of the folding axis of the folded cell ranges of 5 mm to 300 mm.

16. The secondary battery of claim 12, wherein the pressing tape is attached to surround an upper portion of the folded cell so that the upper portion of the folded cell is pressed.

17. The secondary battery of claim 16, wherein the pressing tape is attached to surround the folded cell in a folding direction of the folded cell.

18. The secondary battery of claim 17, wherein the pressing tape has a thickness of 1 µm to 300 µm.

19. The secondary battery of claim 17, wherein a length of the pressing tape attached to the folded cell in a direction of the folding axis of the folded cell ranges of 0.5 mm to 300 mm.

20. The secondary battery of claim 16, wherein, the pressing tape is attached to surround the upper portion of the folded cell in a direction of a folding axis of the folded cell.

21. The secondary battery of claim 9, wherein the pressing tape comprises a base material and an adhesive layer, and
the base material comprises any one of polypropylene, polyethylene, polyimide, and polyethylene terephthalate.
